# EUROPEAN PATENT SPECIFICATION

(11) **EP 4 439 281 B1**
(45) Date of publication and mention of the grant of the patent: **18.02.2026**
(21) Application number: 23897952.0
(22) Date of filing: 19.06.2023
(51) Int. Cl.: G06F 8/71, G06F 8/65, G06F 3/06, G06F 21/64, H01M 10/42

(54) **DEVICE MANAGEMENT SYSTEM AND PROGRAM MANAGEMENT METHOD THEREOF**
VORRICHTUNGSVERWALTUNGSSYSTEM UND PROGRAMMVERWALTUNGSVERFAHREN DAFÜR
SYSTÈME DE GESTION DE DISPOSITIF ET PROCÉDÉ DE GESTION DE PROGRAMME ASSOCIÉ

(30) Priority: 30.11.2022 KR 20220164431
(43) Date of publication of application: 02.10.2024
(73) Proprietor: LG Energy Solution, Ltd., Seoul 07335 (KR)
(72) Inventor: SON, Jaehyeong, Daejeon 34122 (KR); KIM, Ho Soo, Daejeon 34122 (KR); AN, Jinhyuk, Daejeon 34122 (KR); KIM, Duksu, Daejeon 34122 (KR)
(74) Representative: BCKIP Part mbB
(86) International application number: PCT/KR2023/008431
(87) International publication number: WO 2024/117412

(56) References cited:
- CN-B- 112 394 965
- KR-A- 20070 046 500
- KR-A- 20080 008 425
- KR-A- 20130 045 508
- KR-A- 20190 100 074
- KR-A- 20210 070 803
- US-A1- 2019 354 364

## Description

### [Technical Field]

Priority is claimed to Korean Patent Application No.10-2022- 0164431 filed in the Korean Intellectual Property Office on November 30, 2022.

The present invention relates to a device management system and a program management method thereof.

### [Background Art]

An energy storage system relates to various technologies, including renewable energy, a battery that stores electric power, and a power grid. Recently, as supply of smart grid and renewable energy is expanding, and efficiency and stability of power systems are emphasized, a demand for energy storage systems for power supply and demand control and power quality improvement is increasing. Depending on a purpose of use, energy storage systems may have different output and capacity. In order to configure a large-capacity energy storage system, a plurality of battery systems may be connected to provide the large-capacity energy storage system.

For example, an energy storage system applied to a photovoltaic (PV) system may include a battery section composed of a plurality of batteries, a battery management system (BMS) for battery management, a power conversion system (PCS), an energy management system (EMS), a DC-DC converter, and the like.

Among them, the battery management system is a core component for managing batteries which collects state information of batteries included in the battery system, diagnoses failure based on the state information, and controls the operating state of the battery through interworking with a higher controller.

The battery management system may perform predefined operations through a management program (e.g., firmware) stored in a memory. During operation of the battery system, a management program may be updated to change or add a specific function.

The battery management system is subject to functional safety certification in accordance with relevant laws and regulations, and additional certification is required when the management program is updated. In this case, there arises a problem in that unnecessary time and cost are consumed because a functional safety certification procedure should be performed even when a function unrelated to the functional safety item is updated.
CN 112394965 A discloses a battery management system upgrading and operating method, a controller, a battery management system and a storage medium. The battery management system upgrading method comprises the steps of checking whether a target upgrading program corresponding to a program in a first storage area exists or not; if it is detected that the target upgrading program exists, writing the target upgrading program into a second storage area; and after the target upgrading program is successfully written into the second storage area, skipping from the first storage area to the second storage area, and running the target upgrading program.

### [Detailed Description of the Invention]

### [Technical Problem]

The object of the present invention is to provide a device management system according to claim 1 and a program management method according to claim 9 which can minimize unnecessary certification procedures when updating the device management program.

This object is solved by a program management method and a device management system according to the attached independent claims and further advantageous embodiments and improvements of the present invention are listed in the dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

### [Technical Solution]

According to the invention, a device management system that is interconnected with and manages the device includes at least one processor; and a memory configured to store a device management program including at least one instruction executed by the at least one processor.

Here, the at least one processor stores a first program and a second program separately in independently partitioned areas in the memory, wherein the first program is related to functional safety of the device and the second program is unrelated to the functional safety of the device.

The at least one processor may separately store version information of the first program and version information of the second program in the memory.

The at least one processor may independently update only version information of an updated program, when any one of the first program and the second program is updated.

According to the invention, when an update mode of the device management program is entered, the at least one processor updates only one of the first program and the second program, or sequentially updates the first program and the second program.

The memory may include: a first area in which the first program is stored; and a second area in which the second program is stored.

Here, the first area may be defined to be assigned to a fixed specific location on the memory.

Each of the first area and the second area may include: a verification information storage area in which verification information for verifying whether data stored in each area is changed is stored; a code storage area for storing control logic for the device; and data storage area for storing data necessary for management or control of the device.

Here, a first code storage area included in the first area may store diagnosis logic related to the functional safety of the device, and a first data storage area included in the first area may store set values related to the diagnosis logic.

The at least one processor may update verification information stored in a first verification information storage area of the first area in the instance that data stored in at least one of the first code storage area and the first data storage area is changed.

The memory may correspond, although not claimed as such, to a non-volatile memory.

The device management system may correspond to a battery management system located within a battery system.

According to the present invention, the invention also provides a program management method of a device management system including at least one processor and a memory for storing a device management program, wherein the method
includes :separately storing, by the processor, a first program and a second program in independently partitioned areas in the memory, wherein the first program is related to a functional safety of the device and the second program is unrelated to the functional safety of the device; and separately storing, by the processor, version information of the first program and version information of the second program, in the memory.

The method may further include independently updating only version information of an updated program, when any one of the first program and the second program is updated.

According to the invention, the method further includes determining one of the first program and the second program as an update target program when an update mode of the device management program is entered; and independently updating the determined update target program.

The separately storing the first program and the second program in independently partitioned areas may include allocating an area where the first program is stored to a fixed specific location on the memory.

The memory may include a first area in which the first program is stored; and a second area in which the second program is stored. Here, each of the first area and the second area may include: a verification information storage area in which verification information for verifying whether data stored in each area is changed is stored; a code storage area for storing control logic for the device; and data storage area for storing data necessary for management or control of the device.

The separately storing the first program and the second program in independently partitioned areas may include storing diagnosis logic related to the functional safety of the device in a first code storage area included in the first area and storing set values related to the diagnosis logic in a first data storage area included in the first area.

The method may further include, although this is not claimed as such for this method, updating verification information stored in a first verification information storage area of the first area in the instance that data stored in at least one of the first code storage area and the first data storage area is changed.
In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### [Advantageous Effects]

According to embodiments of the present disclosure, when updating a device management program, it is possible to independently update only some of the functions that need to be changed, by separating the device management program into a functional safety related program and a general program and managing them independently, thereby improving program management efficiency.

In addition, according to the present invention, unnecessary certification procedures are minimized by performing a functional safety certification procedure only when a functional safety related program included in the device management program is updated.

### [Brief Description of the Drawings]

FIG. 1 is a block diagram of an energy storage system to which the present invention may be applied.
FIG. 2 is a block diagram of a memory included in a typical battery management system.
FIG. 3 is a block diagram of a device management system according to embodiments of the present invention.
FIG. 4 is a block diagram of a memory included in a device management system according to embodiments of the present invention.
FIG. 5 illustrates partitioned areas of memory according to embodiments of the present invention.
FIG. 6 shows an example of a memory according to embodiments of the present invention.
FIG. 7 is an operation flowchart of a program management method according to embodiments of the present invention.

100: processor
200: memory
210: first area
211: first verification information storage area
212: first code storage area
213: first data storage area
220: second area
221: second verification information storage area
222: second code storage area
223: second data storage area
300: transceiver
400: input interface
500: output interface
600: storage device
700: bus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

Nominal Capacity (Nominal Capa.) refers to a set capacity [Ah] of the battery which is set by a battery manufacturer during development.

State of Charge (SOC) refers to a current state of charge of a battery, represented in percent points [%], and State of Health (SOH) may be a current condition of a battery compared to its ideal or original conditions, represented in percent points [%].

A battery rack refers to a system of a single structure assembled by connecting packs (or modules) set by a battery manufacturer in series/parallel, which can be monitored and controlled by a battery management system (BMS). A battery rack may include several battery packs (or modules) and a battery protection unit or any other protection device.

A battery bank refers to a group of large-scale battery rack systems configured by connecting several racks in parallel. A bank BMS for a battery bank may monitor and control several rack BMSs, each of which manages a battery rack.

A battery section controller (BSC) refers to a device that controls the topmost level of a battery system including a bank level battery system and is also used as a control device in a battery system with a multiple bank level structure.

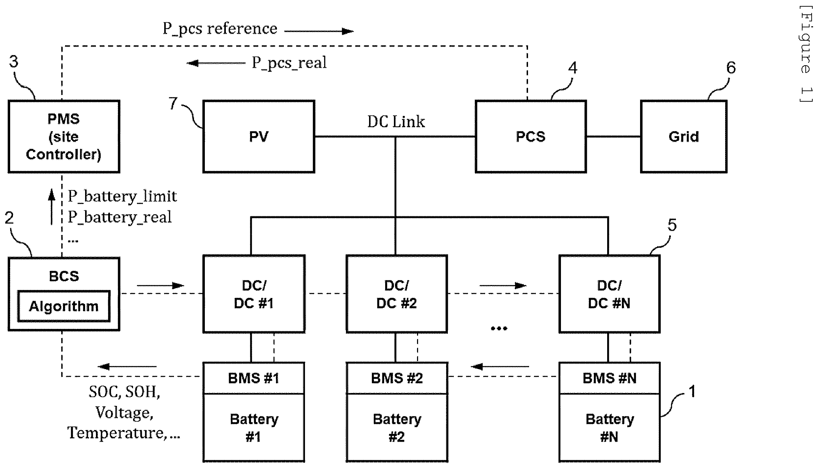

FIG. 1 is a block diagram of an energy storage system to which the present invention may be applied.

FIG. 1 shows an example of a DC coupled system in which an output terminal of a photovoltaic system (PV) 7 is connected to an output terminal of a DC/DC converter 5 and an input terminal of a PCS 4.

In an energy storage system (ESS), a battery is used for storing energy or power, and multiple battery modules may form a battery rack and multiple battery racks may form a battery bank. Here, depending on a device or a system in which the battery is used, a battery rack may be referred to as a battery pack. Battery #1, battery #2,..., battery #N shown in FIG. 1 may be in a form of a battery pack or battery rack.

Here, a battery management system (BMS) may be installed for each battery 1. The BMS may monitor a current, a voltage and a temperature of each battery rack (or pack) to be managed, calculate a state of charge (SOC) of the battery based on monitoring results to control charging and discharging. When each battery is a battery rack in the system of FIG. 1, the BMS may be a rack BMS (RBMS).

A battery section controller (BSC) 2 may be located in each battery section which includes a plurality of batteries, peripheral circuits, and devices to monitor and control objects such as a voltage, a current, a temperature, and a circuit breaker.

Furthermore, a power conversion/conditioning system (PCS) 4 installed in each battery section controls power supplied from the outside and power supplied from the battery section to the outside and may include a DC/AC inverter. In addition, the output of the DC/DC converter 5 may be connected to the power conversion system 4 and the power conversion system 400 may be connected to a power grid 6. The PCS 4 normally operates in a constant power mode. A power management system (PMS) or an energy management system (EMS) 3 connected to the power conversion system may control output of the power conversion system based on monitoring and control results of the BMS or BSC.

Meanwhile, CAN (Controller Area Network) or Ethernet may be used for communication (indicated by a dotted line in FIG. 1) between the BMS, the BSC 2, the PMS 3 and the power conversion system 4.

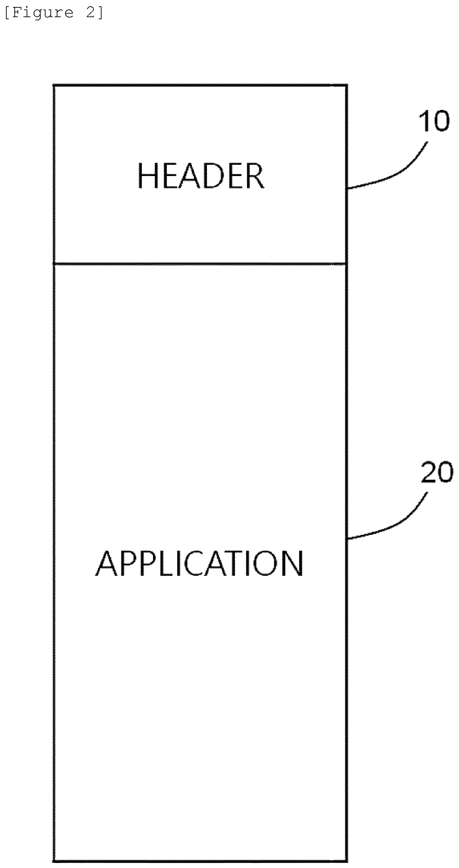

FIG. 2 is a block diagram of a memory included in a typical battery management system.

Among components included in an energy storage system, the battery management system (BMS) is a core component for managing batteries which collects state information of the batteries included in the battery system, diagnoses failure based on the state information, and controls the operating state of the battery through interworking with a high level controller.

The battery management system may perform predefined operations through a management program (eg, firmware) stored in a memory.

Referring to FIG. 2, a memory included in the battery management system may include a header area 10 and an application area 20. The header area 10 may store verification information (e.g., a checksum value) for verifying whether data stored in the application area 20 is changed and the application area 20 may store control logic for battery management and data necessary for control. The battery management system may operate according to a management program stored in the memory.

The battery management system is certified to meet requirements for functional safety in accordance with relevant laws and regulations. Here, even when the management program of the battery management system is updated during operation of the energy storage system, additional certification is required.

As shown in FIG. 2, in a case of a typical battery management system, even when an item irrelevant to functional safety is updated, a functional safety certification procedure must be performed, since management programs are not functionally separated on memory. Whenever an update of the management program is performed, a certification procedure should be performed, resulting in unnecessary time and expense.

The present invention is presented to solve the problems and proposes a device management system and a program management method thereof, which can improve program management efficiency and minimize unnecessary certification procedures at the same time.

Hereinafter, preferred embodiments according to the present invention will be described in detail with reference to the accompanying drawings.

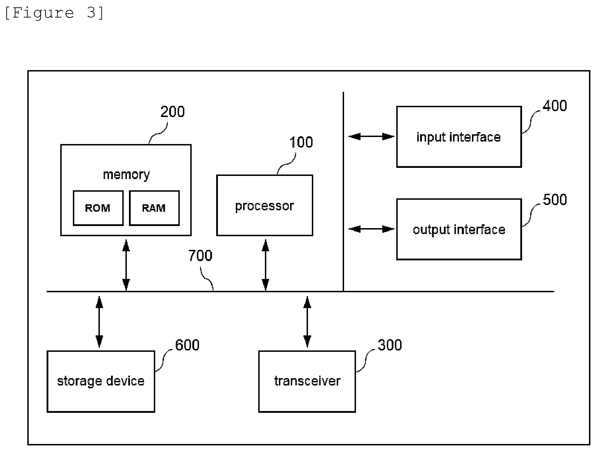

FIG. 3 is a block diagram of a device management system according to embodiments of the present invention.

A device management system according to embodiments of the present invention may be a battery management system (BMS) located in a battery system included in an energy storage system. However, the scope of the present invention is not limited to this, and any apparatus that manages a specific device using a device management program installed in a memory in association with the specific device should be interpreted as a device management system according to the present invention.

The device management system may include at least one processor 100, a memory 200 for storing a device management program including at least one command executed through the at least one processor, and a transceiver 300 connected to a network to perform communication.

The device management program includes a first program related to functional safety of the device and a second program irrelevant to the functional safety of the device. For example, the first program may include a state diagnosis program for diagnosing a state of the battery by measuring voltage, current, and temperature of the battery.

The at least one command executed by the at least one processor may include a command to separately store the first program and the second program in independently partitioned areas within a memory.

The command to store may further include a command to allocate an area where the first program is stored to a fixed location on the memory.

The at least one command may further include a command for separately storing version information of the first program and version information of the second program in the memory.

The at least one command may further include a command to determine one of the first program and the second program as an update target program when the device management program enters an update mode; and a command to independently update the determined update target program.

The at least one command may further include a command to independently update only version information of an updated program, when any one of the first program and the second program is updated.

The device management system may further include an input interface 400, an output interface 500, a storage device 600, and the like. Respective components included in the device management system may be connected by a bus 700 to communicate with each other.

The processor 100 may execute program commands stored in at least one of the memory 200 and the storage device 600. Here, the processor may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

In embodiments, the device management program according to the present invention may be stored and managed in a non-volatile memory. For example, the device management program may be stored and managed in a read-only memory (ROM).

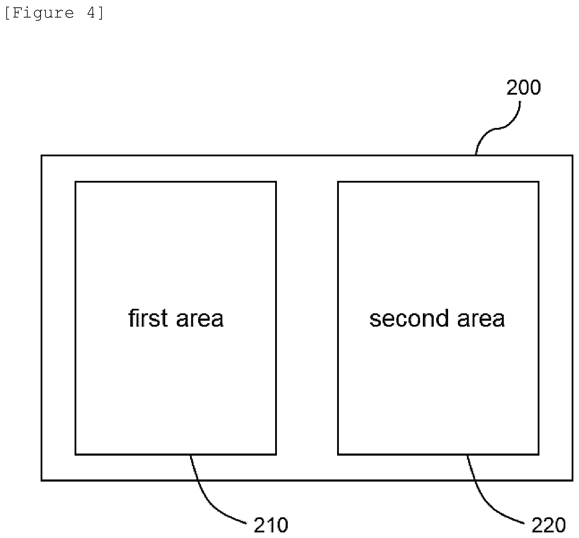

FIG. 4 is a block diagram of a memory included in a device management system according to embodiments of the present invention.

Referring to FIG. 4, the memory 200 may include a first area 210 and a second area 220. Here, the first and second areas may correspond to specific areas which are independently partitioned in the memory.

The device management program according to the present invention includes a first program related to functional safety of the device and a second program unrelated to the functional safety of the device. Here, the processor separately stores the first program in the first area 210 and the second program in the second area 220. In other words, device management programs according to the present invention are configured to be separated into a safety-related program and a general program and the device management system may be configured to store and manage them independently.

In the embodiments, the first area 210 may be defined to be fixedly allocated to a specific location on a memory. For example, safety-related programs may be defined to be stored in a fixed location in ROM.

Version information for the first program and version information for the second program may be separately stored in the memory 200. In an embodiment, version information for the first program may be stored in the first area 210 and version information for the second program may be stored in the second area 220. Accordingly, even if one of the version information of the first and second programs is changed, the version information of the other program whose version is not changed may be maintained.

The first and second programs are independently updated. In other words, the first and second programs are not updated simultaneously, but only one of them is updated or they are updated sequentially.

According to the invention, when the device management system enters an update mode of the device management program, the processor determines any one of the first and second programs as an update target program. Here, the update target program may be determined based on an identifier included in an update file being input. Thereafter, the processor may independently update only the determined update target program.

When any one of the first program and the second program is updated, only version information of the updated program may be independently updated. For example, when a second program unrelated to functional safety is updated, the processor may change only the version information of the second program (from V1 to V2). Here, since version information of the first program, which is a functional safety-related program, is maintained, a separate functional safety certification procedure for the device may not be performed.

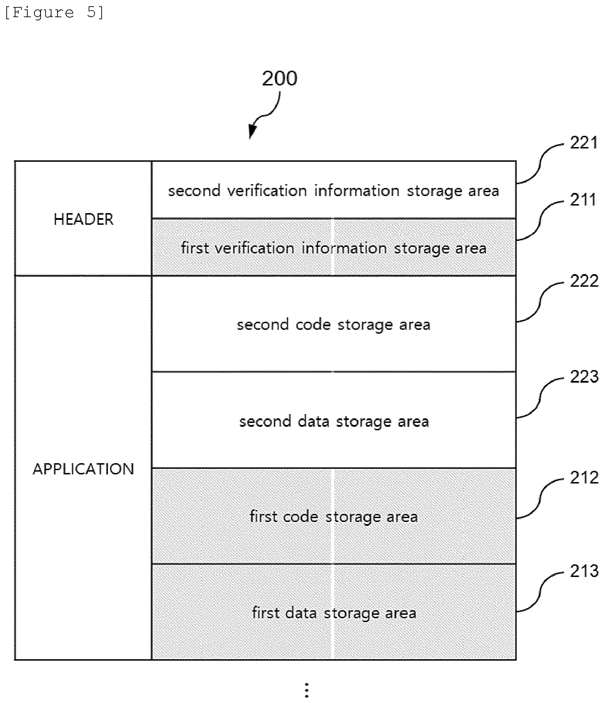

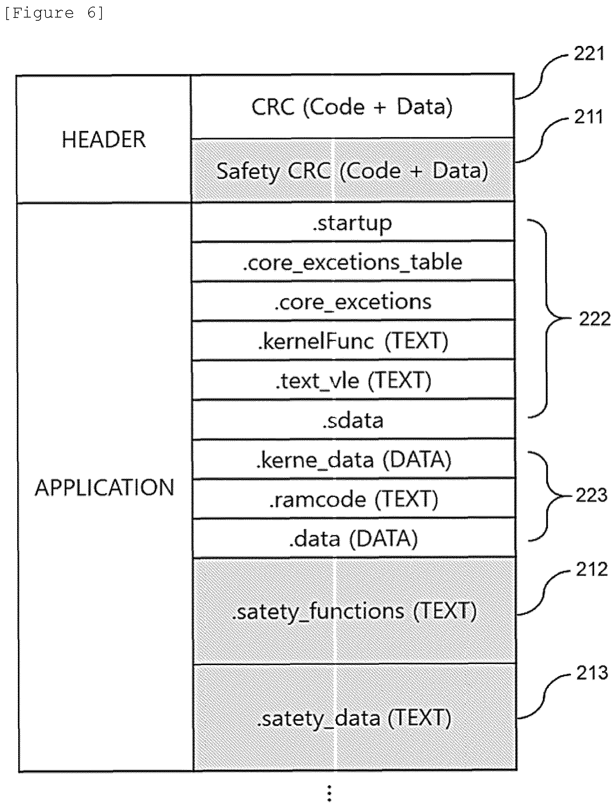

FIG. 5 illustrates partitioned areas of memory according to embodiments of the present invention and FIG. 6 shows an example of a memory according to embodiments of the present invention.

The memory 200 may include a first area and a second area. Here, the first area may be configured to store the first program related to functional safety of the device, and the second area may be configured to store the second program unrelated to the functional safety.

Referring to FIG. 5, the first area may include a first verification information storage area 211, a first code storage area 212, and a first data storage area 213, and a second area may include a second verification information storage area 221, a second code storage area 222, and a second data storage area 223.

The verification information storage area may store verification information for verifying whether data stored in another area is changed. For example, the verification information storage area may store a checksum value for a cyclic redundancy check (CRC).

The code storage area may store logic for managing or controlling the device. For example, the code storage area may store codes for monitoring, diagnosing, or controlling the device.

The data storage area may store data required for device management or control.

The first verification information storage area 211 and the second verification information storage area 221 are included in a header area of the memory 200, and the first code storage area 212, the first data storage area 213, the second code storage area 222, and the second data storage area 223 may be included in an application area of the memory 200.

The first code storage area 212 may store diagnosis logic related to functional safety of the device, and the first data storage area 213 may store set values related to the diagnosis logic stored in the first code storage area 212. For example, when the device management system according to the present invention is a battery management system located in a battery system, the first code storage area 212 may store measurement logic of voltage, current, and temperature for diagnosing a state of the battery and state diagnosis logic based on measured values. Furthermore, the first data storage area 213 may store set values of diagnosis (eg, a reference threshold value, etc.) for diagnosing a battery state.

Referring to FIG. 6, the memory 200 according to embodiments of the present invention may include a first verification information storage area 211 and a second verification information storage area 221 in the header area, and include a first code storage area 212, a first data storage area 213, a second code storage area 222, and a second data storage area 223 in the application area.

The first verification information storage area 211 may store verification information (e.g., [Safety CRC (Code + Data)]) for verifying whether the first program stored in the first areas 212 and 213 is changed. As a specific example, the first verification information storage area 211 may store a checksum value for a cyclic redundancy check (CRC).

In addition, the second verification information storage area 221 may store verification information (e.g., [CRC (Code + Data)]) for verifying whether the second programs stored in the second areas 222 and 223 are changed.

The first code storage area 212 may store diagnosis logic (e.g., [.satety_functions (TEXT)]) related to functional safety of the device, and the first data storage area 213 may store set values (eg, [.satety_data (TEXT)]) related to the diagnosis logic stored in the first code storage area 212.

In addition, the second code storage area 222 may store control logic unrelated to the functional safety of the device (e.g., [.startup], [.core_excetions_table], [.core_excetions], [.kernelFunc (TEXT) ], [.text_vle (TEXT) ], [.sdata]), and the second data storage area 223 may store data related to the control logic stored in the second code storage area 222 ( For example, [.kerne_data (DATA)], [.ramcode (TEXT)], [.data (DATA)]).

Referring to FIGS. 5 and 6, the first program according to the present invention is stored in the first areas 211, 212, and 213, and the second program is stored in the second areas 221, 222, and 223, and thus, they may be managed independently.

When data stored in at least one of the first code storage area 212 and the first data storage area 213 is changed, the processor may update the verification information stored in the first verification information storage area 211 of the first area. For example, when data stored in the first code storage area 212 and the first data storage area 213 is changed due to an update of the first program, the processor may create a new value for a checksum stored in the first verification information storage area 211 based on the changed data and update the version information of the first program.

In addition, when data stored in at least one of the second code storage area 222 and the second data storage area 223 is changed, the processor may update the verification information stored in the second verification information storage area 221 of the second area. For example, when data stored in the second code storage area 222 and the second data storage area 223 is changed due to an update of the second program, the processor may create a new value for a checksum stored in the second verification information storage area 221 based on the changed data and update the version information of the second program.

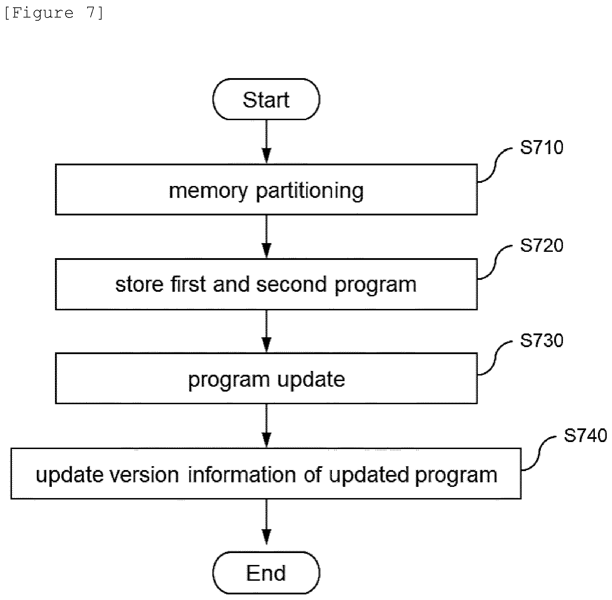

FIG. 7 is an operation flowchart of a program management method according to embodiments of the present invention.

The processor may perform partitioning the memory into a first area and a second area (S710). Here, the first area may be defined to be fixedly allocated to a specific location on a non-volatile memory.

The processor stores a first program related to functional safety of the device in the first area, and stores a second program unrelated to the functional safety of the device in the second area (S720). Here, the processor may store version information of the first program and version information of the second program in the first area and the second area, respectively.

The processor independently updates the first and second programs (S730). For example, when the device management system enters an update mode of the device management program, the processor determines any one of the first and second programs as an update target program, for example based on an identifier included in an update file being input. Thereafter, the processor independently updates only the determined update target program.

When any one of the first program and the second program is updated, the processor may independently update only the version information of the updated program (S740). For example, when a second program unrelated to functional safety is updated, the processor may change only the version information of the second program (from V1 to V2). Here, since the version information of the first program, which is a functional safety-related program, is maintained, a separate functional safety certification procedure for the device may not be performed.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention. The scope of the invention is defined by the claims as interpreted according to Art. 69 of the EPC protocol.

## Claims

1. A device management system (400) that is interconnected with and manages a device (600), wherein the device management system is subject to functional safety certification in accordance with relevant laws and regulations, and additional certification is required when the management program is updated, the system (400) comprising:
a) at least one processor (100); and
b) a memory (200) configured to store a device management program including at least one instruction executed by the at least one processor (100), wherein the device management program is separated into a first program and a second program and the first program is related to functional safety of the device (600) and the second program is unrelated to the functional safety of the device (600),
c) wherein the at least one processor (100) stores the first program and the second program separately in independently partitioned areas (10, 20, 211-213, 221-223) in the memory (200); and
d) wherein, when an update mode of the device management program is entered, the at least one processor (100) updates only one of the first program and the second program, or sequentially updates the first program and the second program, and only when the functional safety related first program is updated, a functional safety certification procedure is performed.

2. The system of claim 1, wherein the at least one processor (100) separately stores version information of the first program and version information of the second program in the memory (200).

3. The system of claim 2, wherein the at least one processor (100) independently updates only version information of an updated program, when any one of the first program and the second program is updated.

4. The system (400) of any one of claims 1 to 3, wherein the memory (200) includes:
a first area (210-213) in which the first program is stored; and
a second area (220-223) in which the second program is stored,
wherein the first area (210-213) is defined to be assigned to a fixed specific location on the memory (200).

5. The system (400) of claim **4,** wherein each of the first area (210-213) and the second area (220-223) includes:
a verification information storage area (211, 221) in which verification information for verifying whether data stored in each area (10, 20, 211-213, 221-223) is changed is stored;
a code storage area (222) for storing control logic for the device (600); and
data storage area (10, 20, 211-213, 221-223) for storing data necessary for management or control of the device (600).

6. The system (400) of claim 5, wherein a first code storage area (212) included in the first area stores diagnosis logic related to the functional safety of the device (600), and
a first data storage area (213) included in the first area stores set values related to the diagnosis logic.

7. The system (400) of claim 6, wherein the at least one processor (100) updates verification information stored in a first verification information storage area (211, 221) of the first area (210-213) in the instance that data stored in at least one of the first code storage area (212) and the first data storage area (213) is changed.

8. The system (400) of any one of claims 1 to 7, wherein the device management system is a battery management system located within a battery system.

9. A program management method of a device management system (400), wherein the device management system (400) is subject to functional safety certification in accordance with relevant laws and regulations, and additional certification is required when the management program is updated, the system (400) including at least one processor (100) and a memory (200) for storing a device management program for managing a deice (600), wherein the device management program is separated into a first program and a second program and the first program is related to functional safety of the device (600) and the second program is unrelated to the functional safety of the device (600), the method comprising:
a) separately storing (720), by the processor (100), the first program and the second program in independently partitioned areas (10, 20, 211-213, 221-223) in the memory (200); and
b) separately storing, by the processor (100), version information of the first program and version information of the second program, in the memory (200); and
c) determining one of the first program and the second program as an update target program when an update mode of the device management program is entered, independently updating the determined update target program, wherein only when the functional safety related first program is updated, a functional safety certification procedure is performed.

10. The method of claim 9, further comprising independently updating only version information of an updated program, when any one of the first program and the second program is updated.

11. The method of any one of claims 9 to 10, wherein the separately storing the first program and the second program in independently partitioned areas (10, 20, 211-213, 221-223) includes allocating an area (10, 20, 211-213, 221-223) where the first program is stored to a fixed specific location on the memory (200).

12. The method of any one of claims 9 to 11, wherein the memory (200) includes a first area (210-213) in which the first program is stored; and a second area (220-223) in which the second program is stored, and
each of the first area (210-213) and the second area (220-223) includes:
a verification information storage area (211, 221) in which verification information for verifying whether data stored in each area (10, 20, 211-213, 221-223) is changed is stored;
a code storage area (222) for storing control logic for the device (600); and
data storage area (10, 20, 211-213, 221-223) for storing data necessary for management or control of the device (600).

13. The method of claim 12, wherein the separately storing the first program and the second program in independently partitioned areas (10, 20, 211-213, 221-223) includes storing diagnosis logic related to the functional safety of the device (600) in a first code storage area (212) included in the first area (210-213) and storing set values related to the diagnosis logic in a first data storage area (213) included in the first area (210-213).

## Patentansprüche

1. Einrichtungsmanagementsystem (400), das mit einer Einrichtung (600) verbunden ist und diese managed, wobei das Einrichtungsverwaltungssystem einer Funktionssicherheitszertifizierung gemäß einschlägigen Gesetzen und Vorschriften unterliegt, und eine zusätzliche Zertifizierung erforderlich ist, wenn das Managementprogramm aktualisiert wird, wobei das System (400) umfasst:
a) mindestens einen Prozessor (100); und
b) einen Speicher (200), der konfiguriert ist, um ein Einrichtungsmanagementprogramm zu speichern, das mindestens eine Anweisung enthält, die von dem mindestens einen Prozessor (100) ausgeführt wird, wobei das Einrichtungsmanagementprogramm in ein erstes Programm und ein zweites Programm getrennt ist und das erste Programm mit der Funktionssicherheit der Einrichtung (600) in Beziehung steht und das zweite Programm nicht mit der Funktionssicherheit der Einrichtung (600) in Beziehung steht,
c) wobei der mindestens eine Prozessor (100) das erste Programm und das zweite Programm getrennt in unabhängig partitionierten Bereichen (10, 20, 211-213, 221-223) in dem Speicher (200) speichert; und
d) wobei, wenn in einen Aktualisierungsmodus des Einrichtungsmanagementprogramms übergegangen wird, der mindestens eine Prozessor (100) nur eines von dem ersten Programm und dem zweiten Programm aktualisiert, oder das erste Programm und das zweite Programm sequentiell aktualisiert, und nur wenn das mit der Funktionssicherheit in Beziehung stehende erste Programm aktualisiert wird, ein Funktionssicherheitszertifizierungsverfahren durchgeführt wird.

2. System nach Anspruch 1, wobei der mindestens eine Prozessor (100) Versionsinformationen des ersten Programms und Versionsinformationen des zweiten Programms getrennt in dem Speicher (200) speichert.

3. System nach Anspruch 2, wobei der mindestens eine Prozessor (100) nur Versionsinformationen eines aktualisierten Programms unabhängig aktualisiert, wenn irgendeines von dem ersten Programm und dem zweiten Programm aktualisiert wird.

4. System (400) nach einem der Ansprüche 1 bis 3, wobei der Speicher (200) enthält:
einen ersten Bereich (210-213), in dem das erste Programm gespeichert ist; und
einen zweiten Bereich (220-223), in dem das zweite Programm gespeichert ist,
wobei der erste Bereich (210-213) so definiert ist, dass er einem festen spezifischen Ort auf dem Speicher (200) zugewiesen ist.

5. System (400) nach Anspruch 4, wobei der erste Bereich (210-213) und der zweite Bereich (220-223) jeweils enthalten:
einen Verifizierungsinformationsspeicherbereich (211, 221), in dem Verifizierungsinformationen zum Verifizieren, ob Daten, die in jedem Bereich (10, 20, 211-213, 221-223) gespeichert sind, geändert werden, gespeichert sind;
einen Codespeicherbereich (222) zum Speichern von Steuerlogik für die Einrichtung (600); und
einen Datenspeicherbereich (10, 20, 211-213, 221-223) zum Speichern von Daten, die zum Management oder zur Steuerung der Einrichtung (600) notwendig sind.

6. System (400) nach Anspruch 5, wobei ein erster Codespeicherbereich (212), der in dem ersten Bereich enthalten ist, Diagnoselogik speichert, die mit der Funktionssicherheit der Einrichtung (600) in Beziehung steht, und
ein erster Datenspeicherbereich (213), der in dem ersten Bereich enthalten ist, Sollwerte speichert, die mit der Diagnoselogik in Beziehung stehen.

7. System (400) nach Anspruch 6, wobei der mindestens eine Prozessor (100) Verifizierungsinformationen, die in einem ersten Verifizierungsinformationsspeicherbereich (211, 221) des ersten Bereichs (210-213) gespeichert sind, in dem Fall aktualisiert, dass Daten, die in mindestens einem von dem ersten Codespeicherbereich (212) und dem ersten Datenspeicherbereich (213) gespeichert sind, geändert werden.

8. System (400) nach einem der Ansprüche 1 bis 7, wobei das Einrichtungsmanagementsystem ein Batteriemanagementsystem ist, das sich innerhalb eines Batteriesystems befindet.

9. Programmmanagementverfahren eines Einrichtungsmanagementsystems (400), wobei das Einrichtungsmanagementsystem (400) einer Funktionssicherheitszertifizierung gemäß einschlägigen Gesetzen und Vorschriften unterliegt, und eine zusätzliche Zertifizierung erforderlich ist, wenn das Managementprogramm aktualisiert wird, wobei das System (400) mindestens einen Prozessor (100) und einen Speicher (200) zum Speichern eines Einrichtungsmanagementprogramms zum Managen einer Einrichtung (600) enthält, wobei das Einrichtungsmanagementprogramm in ein erstes Programm und ein zweites Programm getrennt ist und das erste Programm mit der Funktionssicherheit der Einrichtung (600) in Beziehung steht und das zweite Programm nicht mit der Funktionssicherheit der Einrichtung (600) in Beziehung steht, wobei das Verfahren umfasst:
a) getrenntes Speichern (720), durch den Prozessor (100), des ersten Programms und des zweiten Programms in unabhängig partitionierten Bereichen (10, 20, 211-213, 221-223) in dem Speicher (200); und
b) getrenntes Speichern, durch den Prozessor (100), von Versionsinformationen des ersten Programms und Versionsinformationen des zweiten Programms in dem Speicher (200); und
c) Bestimmen eines von dem ersten Programm und dem zweiten Programm als ein Aktualisierungszielprogramm, wenn in einen Aktualisierungsmodus des Einrichtungsmanagementprogramms übergegangen wird, unabhängiges Aktualisieren des bestimmten Aktualisierungszielprogramms, wobei nur wenn das mit der Funktionssicherheit in Beziehung stehende erste Programm aktualisiert wird, ein Funktionssicherheitszertifizierungsverfahren durchgeführt wird.

10. Verfahren nach Anspruch 9, ferner umfassend ein unabhängiges Aktualisieren nur von Versionsinformationen eines aktualisierten Programms, wenn irgendeines von dem ersten Programm und dem zweiten Programm aktualisiert wird.

11. Verfahren nach einem der Ansprüche 9 bis 10, wobei das getrennte Speichern des ersten Programms und des zweiten Programms in unabhängig partitionierten Bereichen (10, 20, 211-213, 221-223) ein Zuweisen eines Bereichs (10, 20, 211-213, 221-223), in dem das erste Programm gespeichert ist, zu einem festen spezifischen Ort auf dem Speicher (200) enthält.

12. Verfahren nach einem der Ansprüche 9 bis 11, wobei der Speicher (200) einen ersten Bereich (210-213), in dem das erste Programm gespeichert ist; und einen zweiten Bereich (220-223), in dem das zweite Programm gespeichert ist, enthält, und
der erste Bereich (210-213) und der zweite Bereich (220-223) jeweils enthalten:
einen Verifizierungsinformationsspeicherbereich (211, 221), in dem Verifizierungsinformationen zum Verifizieren, ob Daten, die in jedem Bereich (10, 20, 211-213, 221-223) gespeichert sind, geändert werden, gespeichert sind;
einen Codespeicherbereich (222) zum Speichern von Steuerlogik für die Einrichtung (600); und
einen Datenspeicherbereich (10, 20, 211-213, 221-223) zum Speichern von Daten, die zum Management oder zur Steuerung der Einrichtung (600) notwendig sind.

13. Verfahren nach Anspruch 12, wobei das getrennte Speichern des ersten Programms und des zweiten Programms in unabhängig partitionierten Bereichen (10, 20, 211-213, 221-223) ein Speichern von Diagnoselogik, die mit der Funktionssicherheit der Einrichtung (600) in Beziehung steht, in einem ersten Codespeicherbereich (212), der in dem ersten Bereich (210-213) enthalten ist, und ein Speichern von Sollwerten, die mit der Diagnoselogik in Beziehung stehen, in einem ersten Datenspeicherbereich (213), der in dem ersten Bereich (210-213) enthalten ist, enthält.

## Revendications

1. Système de gestion de dispositif (400) relié à un dispositif (600) et gérant celui-ci, ledit système de gestion de dispositif étant soumis à une certification de sécurité fonctionnelle conformément aux lois et réglementations pertinentes, une certification supplémentaire étant requise lorsque le programme de gestion est mis à jour, ledit système (400) comprenant :
a) au moins un processeur (100) ; et
b) une mémoire (200) configurée pour stocker un programme de gestion de dispositif comprenant au moins une instruction exécutée par ledit au moins un processeur (100), le programme de gestion de dispositif étant séparé en un premier programme et un deuxième programme, et le premier programme étant relatif à la sécurité fonctionnelle du dispositif (600) et le deuxième programme n'étant pas relatif à la sécurité fonctionnelle du dispositif (600),
c) où ledit au moins un processeur (100) stocke le premier programme et le deuxième programme séparément dans des zones positionnées indépendamment (10, 20, 211-213, 221-223) dans la mémoire (200) ; et
d) où, lorsqu'un mode de mise à jour du programme de gestion de dispositif est entré, ledit au moins un processeur (100) met à jour un seul programme entre le premier et le deuxième programmes, ou met à jour séquentiellement le premier programme et le deuxième programme, une procédure de certification de sécurité fonctionnelle n'étant appliquée que si le premier programme relatif à la sécurité fonctionnelle est mis à jour.

2. Système selon la revendication 1, où ledit au moins un processeur (100) stocke séparément des informations de version du premier programme et des informations de version du deuxième programme dans la mémoire (200).

3. Système selon la revendication 2, où ledit au moins un processeur (100) ne met à jour indépendamment que des informations de version d'un programme mis à jour, lorsqu'un programme quelconque entre le premier programme et le deuxième programme est mis à jour.

4. Système (400) selon l'une des revendications 1 à 3, où la mémoire (200) comprend :
une première zone (210-213) où le premier programme est stocké ; et
une deuxième zone (220-223) où le deuxième programme est stocké,
où la première zone (210-213) est définie pour être affectée à un emplacement fixe spécifique de la mémoire (200).

5. Système (400) selon la revendication 4, où la première (210-213) et la deuxième zones (220-223) comprennent chacune :
une zone de stockage d'informations de vérification (211, 221) où sont stockées des informations de vérification pour vérifier si les données mémorisées dans chaque zone (10, 20, 211-213, 221-223) ont été modifiées ;
une zone de stockage de code (222) pour stocker une logique de commande pour le dispositif (600) ; et
une zone de stockage de données (10, 20, 211-213, 221-223) pour stocker des données nécessaires à la gestion ou à la commande du dispositif (600).

6. Système (400) selon la revendication 5, où une première zone de stockage de code (212) comprise dans la première zone stocke une logique de diagnostic relative à la sécurité fonctionnelle du dispositif (600), et où
une première zone de stockage de données (213) comprise dans la première zone stocke des valeurs de consigne relatives à la logique de diagnostic.

7. Système (400) selon la revendication 6, où ledit au moins un processeur (100) met à jour des informations de vérification mémorisées dans une première zone de stockage d'informations de vérification (211, 221) de la première zone (210-213) dans le cas où des données mémorisées dans la première zone de stockage de code (212) et/ou dans la première zone de stockage de données (213) sont modifiées.

8. Système (400) selon l'une des revendications 1 à 7, où le système de gestion de dispositif est un système de gestion de batterie situé à l'intérieur d'un système de batterie.

9. Procédé de gestion de programme d'un système de gestion de dispositif (400), ledit système de gestion de dispositif (400) étant soumis à une certification de sécurité fonctionnelle conformément aux lois et règlements pertinents, une certification supplémentaire étant requise lorsque le programme de gestion est mis à jour, ledit système (400) comprenant au moins un processeur (100) et une mémoire (200) pour stocker un programme de gestion de dispositif (600), ledit programme de gestion de dispositif étant séparé en un premier programme et un deuxième programme, et le premier programme étant relatif à la sécurité fonctionnelle du dispositif (600) et le deuxième programme n'étant pas relatif à la sécurité fonctionnelle du dispositif (600), ledit procédé comprenant :
a) le stockage séparé (720), par le processeur (100), du premier programme et du deuxième programmes dans des zones positionnées indépendamment (10, 20, 211-213, 221-223) dans la mémoire (200) ; et
b) le stockage séparé, par le processeur (100), d'informations de version du premier programme et d'informations de version du deuxième programme, dans la mémoire (200) ; et
c) la détermination du premier programme ou du deuxième programme en tant que programme cible de mise à jour lorsqu'un mode de mise à jour du programme de gestion de dispositif est entré, la mise à jour indépendante du programme cible de mise à jour déterminé, une procédure de certification de sécurité fonctionnelle n'étant appliquée que si le premier programme relatif à la sécurité fonctionnelle est mis à jour.

10. Procédé selon la revendication 9, comprenant en outre une mise à jour indépendante des seules informations de version d'un programme mis à jour, lorsqu'un programme quelconque entre le premier programme et le deuxième programme est mis à jour.

11. Procédé selon la revendication 9 ou la revendication 10, où le stockage séparé du premier programme et du deuxième programme dans des zones positionnées indépendamment (10, 20, 211-213, 221-223) comprend l'affectation d'une zone (10, 20, 211-213, 221-223) où le premier programme est stocké à un emplacement fixe spécifique de la mémoire (200).

12. Procédé selon l'une des revendications 9 à 11, où la mémoire (200) comprend une première zone (210-213) où le premier programme est stocké ; et une deuxième zone (220-223) où le deuxième programme est stocké, et
où la première zone (210-213) et la deuxième zone (220-223) comprennent chacune :
une zone de stockage d'informations de vérification (211, 221) où sont stockées des informations de vérification pour vérifier si les données mémorisées dans chaque zone (10, 20, 211-213, 221-223) ont été modifiées ;
une zone de stockage de code (222) pour stocker une logique de commande pour le dispositif (600) ; et
une zone de stockage de données (10, 20, 211-213, 221-223) pour stocker des données nécessaires à la gestion ou à la commande du dispositif (600).

13. Procédé selon la revendication 12, où le stockage séparé du premier programme et du deuxième programme dans des zones positionnées indépendamment (10, 20, 211-213, 221-223) comprend le stockage d'une logique de diagnostic relative à la sécurité fonctionnelle du dispositif (600) dans une première zone de stockage de code (212) comprise dans la première zone (210-213), et le stockage de valeurs de consigne relatives à la logique de diagnostic dans une première zone de stockage de données (213) comprise dans la première zone (210-213).
